# EUROPEAN PATENT SPECIFICATION

(11) **EP 3 918 919 B1**
(45) Date of publication and mention of the grant of the patent: **01.01.2025**
(21) Application number: 20748714.1
(22) Date of filing: 28.01.2020
(51) Int. Cl.: A23D 9/007, A23D 9/04, C11B 3/14

(54) **OIL/FAT COMPOSITION AND METHOD FOR PRODUCING SAME**
ÖL/FETT-ZUSAMMENSETZUNG UND VERFAHREN ZUR HERSTELLUNG DAVON
COMPOSITION D'HUILE/MATIÈRE GRASSE ET SON PROCÉDÉ DE PRODUCTION

(30) Priority: 28.01.2019 JP 2019012296; 18.07.2019 JP 2019132610
(43) Date of publication of application: 08.12.2021
(73) Proprietor: The Nisshin OilliO Group, Ltd., Tokyo 104-8285 (JP)
(72) Inventor: TOYOSHIMA, Takashi, Yokohama-shi, Kanagawa 235-8558 (JP); AOYAGI, Kanji, Yokohama-shi, Kanagawa 235-8558 (JP); TSUJINO, Shogo, Yokohama-shi, Kanagawa 235-8558 (JP)
(74) Representative: Winter, Brandl - Partnerschaft mbB
(86) International application number: PCT/JP2020/002944
(87) International publication number: WO 2020/158724

(56) References cited:
- WO-A1-2013/084567
- CN-A- 101 919 451
- JP-A- 2014 058 586
- JP-A- 2015 065 833
- MASASHI SAKATA ET AL: "Quality of fried foods with palm oil", vol. 62, no. 2, 1 February 1985 (1985-02-01), pages 449 - 454, XP009538520, ISSN: 0003-021X, Retrieved from the Internet <URL:https://link.springer.com/article/10.1007/BF02541421> [retrieved on 19850201], DOI: 10.1007/BF02541421
- OHTA, SHIZUYUKI: "Deterioration Inhibitors for Frying Oils", JOURNAL OF JAPAN OIL CHEMISTS' SOCIETY, vol. 37, no. 5, 1988, pages 331 - 343, XP055728054

## Description

### Technical Field

The present invention relates to an oil and/or fat composition, a method for producing an oil and/or fat composition, and a method for suppressing heat coloring in the oil and/or fat composition.

### Background Art

In recent years, consumers have become increasingly concerned about the quality of food products. The concern extends to edible oils and/or fats and the like used in the production of processed foods (such as fried foods).

Oils and/or fats are known to deteriorate when exposed to heat, light, and the like. When oils and/or fats are exposed to heat and light, hydrolytic degradation occurs in the presence of moisture, and oxidative deterioration occurs in the presence of oxygen. As a result of deterioration, the acid value of the oil and/or fat increases, and the flavor and color tone deteriorate. In particular, in the production of fried products (such as fries, tempura, and karaage), heat cooking is performed using an oil and/or fat heated to around 180°C, so that an oil and/or fat used for fried products (hereinafter also referred to as "frying oil and/or fat") is required to suppress deterioration due to heating.

For example, the "Standards and Criteria for Food and Food Additives, etc. (Notification No. 370 in 1959 by the Ministry of Health, Labour and Welfare of Japan)" stipulates that instant noodles (equivalent to fries) must not have an acid value of more than 3 or a peroxide value of more than 30 for the oil and/or fat contained in the noodles.

Another problem that can occur is that the color tone of the frying oil and/or fat becomes darker due to the deterioration of the frying oil and/or fat caused by heat or the like. If the color tone of the frying oil and/or fat becomes darker, the fried product produced using the oil and/or fat is also colored, resulting in impaired appearance.

For example, Japanese Patent No. 4392770 discloses a technology for providing an oil and/or fat with good frying stability by refining a raw oil and/or fat having a specific fatty acid composition and iodine value.

It is also known that fatty acids constituting an oil and/or fat with more double bonds are more susceptible to oxidative deterioration. For example, Japanese Patent No. 4392770 states that if the weight ratio of the amount of monounsaturated fatty acids to the amount of polyunsaturated fatty acids is less than 2.0, the stability of the oil and/or fat to heating is inferior.

Masashi Sakata et al. relates to the quality of fried foods with palm oil (Journal of the American Oil Chemists Society, Springer, DE, vol. 62, no. 2, 1 February 1985, pages 449-458).

CN 101 919 451 A provides a grease combination that can be used as frying oil.

WO 2013/084567 A1 is directed to a palm-type fat and oil and a method for producing the same.

JP 2014 058586 A relates to a method for producing a refined fat and oil and a refined fat and oil.

### Summary of Invention

On the other hand, there is a need for technology that can suppress deterioration caused by heating for a wider range of raw oils and/or fats.

The present invention has been made in view of the above circumstances, and an object thereof is to provide a technology that can suppress the heat coloring of an oil and/or fat composition.

The present inventors have found that the above object can be achieved by combining a deodorized oil and/or fat having a specific degree of refinement with silicone oil. Thus, the present invention has been completed. The invention is defined in the claims.

### Advantageous Effects of Invention

According to the present invention, there is provided a technique capable of suppressing heat coloring of an oil and/or fat composition.

### Description of Embodiments

Hereinafter, embodiments of the present invention are described in detail. Note that the present invention is not limited to the following embodiments. Further, in the present specification, "A (numerical value) to B (numerical value)" means "A or more and B or less," and the ratio means a mass ratio.

### <Oil and/or Fat Composition>

An oil and/or fat composition of the present invention is an oil and/or fat composition including:
93% by mass or more of a deodorized oil and/or fat, wherein
a silicone oil content in the oil and/or fat composition is 0.5 to 10 mass ppm, 10 to 60% by mass of the deodorized oil and/or fat in the oil and/or fat composition is the following deodorized oil and/or fat A,
the remaining deodorized oil and/or fat in the oil and/or fat composition is the following deodorized oil and/or fat B and/or deodorized oil and/or fat C, and
a total content of the deodorized oil and/or fat A, deodorized oil and/or fat B, and deodorized oil and/or fat C is 100 % by mass of the deodorized oil and/or fat in the oil/and or fat composition.

Deodorized oil and/or fat A: a re-deodorized oil and/or fat of palm-based deodorized oil and/or fat having a γ-tocotrienol content of 250 ppm or less in the deodorized oil and/or fat A and an acid value of 0.03 or less.

Deodorized oil and/or fat B: a deodorized oil having a total tocopherol content of 900 ppm or less in the deodorized oil and/or fat B and an acid value of 0.03 or less, which is at least one selected from soybean oil, corn oil, cottonseed oil, and sunflower oil.

Deodorized oil and/or fat C: a rapeseed deodorized oil having a total tocopherol content of 550 ppm or less in the deodorized oil and/or fat C and an acid value of 0.03 or less.

### (Deodorized Oil and/or Fat)

The oil and/or fat composition of the present invention contains 93% by mass or more of a deodorized oil and/or fat. If it is 93% by mass or more, it can have a sufficient function as an oil and/or fat composition used for heating. The deodorized oil and/or fat contained in the oil and/or fat composition is preferably 97% by mass or more, and more preferably 99% by mass or more, and it is particularly preferable that all the oils and/or fats contained in the oil and/or fat composition are deodorized oils and/or fats.

Here, the deodorized oil and/or fat refers to an oil and/or fat from which the odor of the oil and/or fat raw material has been removed, and for example, an oil and/or fat from which odorous components such as aldehydes and ketones have been removed by a deodorizing step such as steam distillation.

In addition, 10 to 60% by mass of the deodorized oil and/or fat in the oil, and/or fat composition of the present invention is the deodorized oil and/or fat A, and the remaining deodorized oil and/or fat contained in the oil and/or fat composition is the deodorized oil and/or fat B and/or the deodorized oil and/or fat C. The deodorized oil and/or fat A is a re-deodorized oil and/or fat of palm-based deodorized oil and/or fat, the deodorized oil and/or fat B is at least one deodorized oil selected from soybean oil, corn oil, cottonseed oil, and sunflower oil, and the deodorized oil and/or fat C is deodorized rapeseed oil. As the deodorized oil and/or fat A, deodorized oil and/or fat B, and deodorized oil and/or fat C, those that have been highly refined as described in <Method for Producing Oil and/or fat Composition> described later can be used. For example, RBD palm-based oils (refined (neutralized or deacidified), bleached (decolored), and deodorized palm-based oils), which are palm-based deodorized oils and/or fats, contain about 320 ppm of γ-tocotrienol and have an acid value of about 0.1. By subjecting these to a general deodorizing step, it is possible to obtain a re-deodorized oil and/or fat containing about 260 ppm of γ-tocotrienol and having an acid value of about 0.06 to 0.1. Although the effect of suppressing heat coloring of the present invention is exhibited by using an oil and/or fat that has undergone an advanced refining step, the component that suppresses heat coloring is unknown. Therefore, in the present invention, the γ-tocotrienol content of the deodorized oil and/or fat A is 250 ppm or less and the acid value is 0.03 or less as a guideline after undergoing an advanced refining step. Here, the "re-deodorized oil and/or fat" refers to an oil and/or fat obtained by undergoing the deodorizing step twice or more.

Further, the oil and/or fat composition of the present invention also contain the deodorized oil and/or fat B and/or deodorized oil and/or fat C, whereby a total content of the deodorized oil and/or fat A, deodorized oil and/or fat B, and deodorized oil and/or fat C is 100% by mass of the deodorized oil and/or fat in the oil and/or fat composition. As described above, although the effect of suppressing heat coloring of the present invention is exhibited by using an oil and/or fat that has undergone an advanced refining step, the component that suppresses heat coloring is unknown. Therefore, for the deodorized oil and/or fat B (such as soybean oil), a deodorized oil and/or fat containing about 1000 ppm of total tocopherol and having an acid value of about 0.1 can be obtained through a refining step including a general deodorizing step, and as a guideline after undergoing an advanced refining step, the total tocopherol content of the deodorized oil and/or fat B was set to 900 ppm or less, and the acid value was set to 0.03 or less. Similarly, for the deodorized oil and/or fat C (such as rapeseed oil), a deodorized oil and/or fat containing about 650 ppm of total tocopherol and having an acid value of about 0.1 can be obtained through a refining step including a general deodorizing step, and as a guideline after undergoing an advanced refining step, the total tocopherol content of the deodorized oil and/or fat C was set to 550 ppm or less, and the acid value was set to 0.03 or less. By using these deodorizing oils and/or fats, heat coloring can be reduced due to the synergistic effect with silicone oil. Note that the total tocopherol content is the total content ratio (mass ratio) of α-tocopherol, β-tocopherol, γ-tocopherol, and δ-tocopherol in the deodorized oil and/or fat.

When the total content of the deodorized oil and/or fat A, deodorized oil and/or fat B, and deodorized oil and/or fat C in the deodorized oil and/or fat is low, and the content of other oils and/or fats is high, the effect of suppressing the heat coloring of the oil and/or fat composition is weakened, so that the total content of the deodorized oil and/or fat A, deodorized oil and/or fat B, and deodorized oil and/or fat C according to the present invention is 100% by mass of the deodorized oil and/or fat in the deodorized oil and/or fat composition. The total content of the deodorized oil and/or fat A, deodorized oil and/or fat B, and deodorized oil and/or fat C is thus 100% by mass of the deodorized oil and/or fat in the deodorized oil and/or fat composition.

In the present invention either one of the deodorized oil and/or fat B and the deodorized oil and/or fat C is used together with the deodorized oil and/or fat A, or all of the deodorized oil and/or fat A, deodorized oil and/or fat B, and deodorized oil and/or fat C may be mixed and used. Since the deodorized oil and/or fat A may solidify at room temperature or at a low temperature, it is preferable to prepare a liquid oil and/or fat composition at around 10 to 20°C and mix it with the liquid oil deodorized oil and/or fat B and/or deodorized oil and/or fat C in order to improve workability. The deodorized oil and/or fat A is contained at 10 to 60% by mass in the deodorized oil and/or fat in the oil and/or fat composition. Further, the deodorized oils and/or fats other than the deodorized oil and/or fat A in the oil and/or fat composition are deodorized oil and/or fat B and/or deodorized oil and/or fat C. Note that the mass ratio of the deodorized oil and/or fat B to the deodorized oil and/or fat C is preferably, for example, deodorized oil and/or fat B:deodorized oil and/or fat C=10 to 90:90 to 10.

### [Deodorized Oil and/or Fat A]

The deodorized oil and/or fat A is a re-deodorized oil and/or fat of palm-based deodorized oil and/or fat having a γ-tocotrienol content of 250 ppm or less in the deodorized oil and/or fat A and an acid value of 0.03 or less. The palm-based deodorized oil and/or fat is a deodorized oil and/or fat that has undergone a physical refining step or chemical refining, and is preferably a palm-based deodorized oil and/or fat (RBD palm-based oil and/or fat) that has undergone a physical refining step. The palm-based deodorized oil and/or fat is a palm oil or a fractionated oil of palm oil. The fractionated oil of palm oil includes palm olein, palm mid fraction, palm stearin, and the like. From the viewpoint of workability on the oil and/or fat composition of the present invention, it is preferable that it is liquid at around 10 to 20°C, and in that case, the melting point of the deodorized oil and/or fat A is preferably low. Therefore, it is preferable to use palm oil and/or palm olein. More preferably, RBD palm oil and/or RBD palm olein is used. Palm olein is a fraction having a high iodine value obtained by fractionating palm oil once or two or more times, and a particularly high iodine value is sometimes called palm super olein. When the iodine value is high, the oil and/or fat is less likely to solidify, so that palm olein preferably has an iodine value of 56 or more, more preferably an iodine value of 60 or more, and further preferably an iodine value of 65 or more. Note that the upper limit of the iodine value of palm olein is not particularly limited, but is preferably 72 or less, and more preferably 70 or less.

The content of γ-tocotrienol in the deodorized oil and/or fat A is 250 ppm or less, preferably 50 to 250 ppm, more preferably 50 to 230 ppm, further preferably 50 to 200 ppm, and most preferably 50 to 150 ppm.

In addition, the acid value of the deodorized oil and/or fat A is 0.00 to 0.03, preferably 0.01 to 0.03, and more preferably 0.01 to 0.02.

### [Deodorized Oil and/or Fat B]

The deodorized oil and/or fat B is a deodorized oil and/or fat having a total tocopherol content of 900 ppm or less in the deodorized oil and/or fat B and an acid value of 0.03 or less, which is at least one selected from soybean oil, corn oil, cottonseed oil, and sunflower oil. Preferably, soybean oil and corn oil having a fatty acid composition similar to that of soybean oil are preferable. The iodine value of an oil and/or fat is a value that reflects the constituent fatty acids of the oil and/or fat, and is also an index of susceptibility to deterioration. The iodine value of the deodorized oil and/or fat B is preferably 100 to 145, and more preferably 120 to 140.

The total tocopherol content in the deodorized oil and/or fat B is preferably 100 to 900 ppm, preferably 100 to 850 ppm, or 100 to 800 mass ppm. The total tocopherol content in the deodorized oil and/or fat B is more preferably 100 to 600 ppm, further preferably 150 to 550 ppm, especially preferably 200 to 460 ppm, and most preferably 200 to 400 ppm. Further, the γ-tocopherol in the deodorized oil and/or fat B is preferably 50 to 600 ppm, more preferably 50 to 550 ppm, further preferably 50 to 480 ppm, and most preferably 80 to 350 ppm.

In addition, the acid value of the deodorized oil and/or fat B is 0.00 to 0.03, preferably 0.01 to 0.03, and more preferably 0.01 to 0.02.

### [Deodorized Oil and/or Fat C]

The deodorized oil and/or fat C is a rapeseed deodorized oil having a total tocopherol content of 550 ppm or less in the deodorized oil and/or fat C and an acid value of 0.03 or less. As the rapeseed oil, oil extracted from raw materials cultivated and distributed as rapeseed can be used. As the rapeseed variety, canola and/or high oleic acid canola can be used. The iodine value of the rapeseed oil is preferably 90 to 130, and more preferably 95 to 120.

The total tocopherol content in the deodorized oil and/or fat C is preferably 100 to 550 ppm, more preferably 150 to 530 ppm, further preferably 150 to 500 ppm, especially preferably 200 to 500 ppm, and most preferably 200 to 460 ppm. Further, the γ-tocopherol in the deodorized oil and/or fat C is preferably 50 to 400 ppm, more preferably 100 to 400 ppm, and further preferably 100 to 350 ppm.

In addition, the deodorized oil and/or fat C has an acid value of 0.00 to 0.03, preferably 0.01 to 0.03, and more preferably 0.01 to 0.02.

### (Silicone Oil)

The oil and/or fat composition of the present invention contains 0.5 to 10 mass ppm of silicone oil. The silicone oil preferably has a dimethylpolysiloxane structure and a kinematic viscosity of 100 to 5000 mm²/s at 25°C. The kinematic viscosity of the silicone oil is more preferably 500 to 2000 mm²/s, further preferably 800 to 1100 mm²/s, and most preferably 900 to 1100 mm²/s. As the silicone oil, those commercially available for food use can be used. Note that the "kinematic viscosity" mentioned here refers to a value measured in accordance with JIS K 2283 (2000). As the silicone oil, it is also preferable to use one containing fine particle silica in addition to the silicone oil.

The silicone oil content (mass ratio) in the oil and/or fat composition of the present invention is 0.5 to 10 mass ppm, more preferably 0.5 to 6 mass ppm, further preferably 1 to 4 mass ppm, and most preferably 2 to 3 mass ppm in the oil and/or fat composition. If the total content of the silicone oil is 0.5 ppm or more, the effect of suppressing foaming during cooking can be sufficiently obtained, and if it is 10 ppm or less, the foaming during cooking does not become too excessive.

In the present invention, the content of each of the fatty acids in the fatty acids constituting glycerides (such as oleic acid) can be measured in accordance with the "Standard Methods for the Analysis of Fats, Oils and Related Materials 2.4.2.3-2013 Fatty Acid Composition (Capillary Gas Chromatography)" established by the Japan Oil Chemists' Society. In addition, the γ-tocotrienol content and tocopherol content in the oil and/or fat composition can be measured in accordance with the "Standard Methods for the Analysis of Fats, Oils and Related Materials 2.4.10-2013 Tocopherol (Fluorescence Detector - High Speed Liquid Chromatography)" established by the Japan Oil Chemists' Society. In addition, the iodine value can be measured in accordance with the "Standard Methods for the Analysis of Fats, Oils and Related Materials 2.3.4.1-2013 Iodine Value (Wijs-Cyclohexane Method)" established by the Japan Oil Chemists' Society.

### (Other Components)

Other components can be added to the heat cooking oil and/or fat composition to the extent that the effects of the present invention are not impaired, and the type and amount of the components to be blended can be appropriately set according to the effect to be obtained and the like. These components are, for example, components used in general oils and/or fats (such as food additives). These components include, for example, antioxidants, emulsifiers, and the like, and are preferably added after deodorization and before filling.

The antioxidants include, for example, tocopherols, ascorbic acids, flavone derivatives, kojic acid, gallic acid derivatives, catechin and esters thereof, fukiic acid, gossypol, sesamol, terpenes, and the like. The coloring components include, for example, carotene, astaxanthin, and the like. The emulsifier is appropriately selected from polyglycerin fatty acid esters, sucrose fatty acid esters, sorbitan fatty acid esters, polysorbates, propylene glycol fatty acid esters, polyglycerin condensed ricinolates, diacylglycerols, waxes, sterol esters, phospholipids, and the like.

### <Use of Oil and/or Fat Composition of Present Invention>

By satisfying the above conditions, the oil and/or fat composition of the present invention has a property that heat coloring of the oil and/or fat composition is suppressed even when heated. The heat coloring of an oil and/or fat can be evaluated by the method shown in Examples. Note that in the present invention, "the increase in heat coloring of an oil and/or fat is suppressed" means that when the oil and/or fat composition of the present invention is heated, the difference between the color tone before heating and the color tone after heating is small compared to an oil and/or fat composition in which the deodorized oil and/or fat A, deodorized oil and/or fat B, and deodorized oil and/or fat C in the oil and/or fat composition of the present invention are replaced with deodorized oils and/or fats obtained from the same oil seed raw material but not satisfying the requirements of the deodorized oil and/or fat A, deodorized oil and/or fat B, and deodorized oil and/or fat C, or an oil and/or fat composition with the same oil and/or fat blend but not containing silicone oil.

Since the oil and/or fat composition of the present invention has the above-mentioned properties, it can be preferably used in applications requiring heating (for example, heating at 160°C or higher). Specifically, the oil and/or fat composition of the present invention can be preferably used for cooking (such as fry cooking), and can be particularly preferably used as the frying fat and oil.

Further, the oil and/or fat composition of the present invention can suppress heat coloring of the oil and/or fat even if heating (for example, heating at 160°C or higher) is repeated. In the present invention, "repeated heating" means that the oil and/or fat composition of the present invention is heated a total of 2 times or more (preferably 4 times or more in total) with a period for cooling the oil and/or fat in between. The upper limit of the number of times of heating is not particularly limited, but may be 20 times or less. Each heating time may be 0.1 hours to 24 hours. The "period for cooling the oil and/or fat" means a period for maintaining the oil temperature lower than the heating temperature (for example, 1 to 300 hours).

### <Method for Producing Oil and/or Fat Composition>

A method for producing an oil and/or fat composition of the present invention is a method for producing an oil and/or fat composition containing 93% by mass or more of a deodorized oil and/or fat, including: deodorizing an RBD palm-based oil and/or fat so as to satisfy a condition of the following deodorized oil and/or fat A; optionally deodorizing at least one oil and/or fat selected from soybean oil, corn oil, cottonseed oil, sunflower oil, and rapeseed oil so as to satisfy the following deodorized oil and/or fat B and/or deodorized oil and/or fat C; and adding silicone oil so that a content of silicone oil in the oil and/or fat composition is 0.5 to 10 mass ppm, wherein in the oil and/or fat composition, 10 to 60% by mass of the deodorized oil and/or fat is the deodorized oil and/or fat A, the remaining deodorized oil and/or fat is the following deodorized oil and/or fat B and/or deodorized oil and/or fat C, and a total content of the deodorized oil and/or fat A, deodorized oil and/or fat B, and deodorized oil and/or fat C is 100% by mass of the deodorized oil and/or fat in the oil and/or fat composition.

Deodorized oil and/or fat A: a re-deodorized oil and/or fat of palm-based deodorized oil and/or fat having a γ-tocotrienol content of 250 ppm or less in the deodorized oil and/or fat A and an acid value of 0.03 or less.

Deodorized oil and/or fat B: a deodorized oil having a total tocopherol content of 900 ppm or less in the deodorized oil and/or fat B and an acid value of 0.03 or less, which is at least one selected from soybean oil, corn oil, cottonseed oil, and sunflower oil.

Deodorized oil and/or fat C: a rapeseed deodorized oil having a total tocopherol content of 550 ppm or less in the deodorized oil and/or fat C and an acid value of 0.03 or less.

The deodorized oil and/or fat, deodorized oil and/or fat A, deodorized oil and/or fat B, deodorized oil and/or fat C, silicone oil, and the like are as described in the above-mentioned <Oil and/or Fat Composition>. In the production of an oil and/or fat composition, a step of deodorizing and a step of adding silicone oil are indispensable, but any method, apparatus, and the like used for producing edible oils and/or fats and the like can be used.

### (Production of Deodorized Oil and/or Fat A)

The deodorized oil and/or fat A uses a palm-based deodorized oil and/or fat as a raw material that has undergone a deodorizing step once. As the palm-based deodorized oil and/or fat, it is possible to use those subjected to chemical refining (NBD palm-based oil and/or fat) including an alkaline neutralization step (an alkaline deacidifying step) or physical refining (RBD palm-based oil and/or fat) not including an alkaline step. Since the amount of RBD palm-based oil and/or fat in circulation is large, it is preferable to use an RBD palm-based oil and/or fat. In the present invention, this palm-based deodorized oil that has been re-refined including deodorizing is used as the deodorized oil and/or fat A. As the re-refining step, there is no problem even if only the deodorizing step is performed, but chemical refining or physical refining can be performed. Since the palm-based deodorized oil and/or fat as the raw material oil and/or fat is lowered in acid value in the initial refining, an alkaline neutralization step for the purpose of reducing the acid value is not essential. From the viewpoint of flavor, physical refining is preferable in which a bleaching step (decoloring step) and a deodorizing step, or a washing step, a bleaching step, and a deodorizing step are performed. Further, it is preferable to use chemical refining that performs a neutralization step, a bleaching step, and a deodorizing step.

For steps other than deodorization, general refining conditions for oils and/or fats can be used.

The production of the deodorized oil and/or fat A includes a step of deodorization so that the γ-tocotrienol content and the acid value in the deodorized oil and/or fat A satisfy the requirements of the deodorized oil and/or fat A, and these can be achieved by performing the deodorizing step under excessive conditions. As the deodorizing condition, a vacuum steam distillation apparatus is used, but it can be carried out at a higher temperature, under a high vacuum, at a higher steam content, or for a longer period of time than the usual conditions for vacuum steam distillation. For example, when it is carried out in a range of the deodorizing temperature of 200 to 280°C, the vacuum degree of 100 to 500 Pa, the steam content of 1 to 8% by mass (vs oil and/or fat), or the deodorizing time of 30 to 120 minutes, it is preferable to satisfy two or more conditions selected from a deodorizing temperature of 23 5°C or higher, a vacuum degree of 500 Pa or lower, a steam content of 2.0% by mass or more (vs oil and/or fat), and a deodorizing time of 50 minutes or more, and more preferably three conditions therefrom. The deodorizing temperature is more preferably 245°C or higher, and further preferably 250°C or higher. The vacuum degree is more preferably 400 Pa or less, further preferably 280 Pa or less, and especially preferably 260 Pa or less. The steam content is more preferably 2.4% by mass or more (vs oil and/or fat), and further preferably 3% by mass or more (vs oil and/or fat). The deodorizing time is more preferably 60 minutes or more, and further preferably 70 minutes or more.

Note that in the deodorizing step, the temperature is lowered at the end of the deodorizing treatment, and it is preferable to add citric acid at that time. Addition of citric acid enhances oxidative stability. Citric acid is preferably added at 1 to 50 ppm, and more preferably 1 to 30 ppm, based on the deodorized oil and/or fat. Since citric acid does not disperse or dissolve in oil as it is, it is preferable to add it as an aqueous solution of 5 to 20% by mass.

### (Production of Deodorized Oil and/or Fat B and Deodorized Oil and/or Fat C)

As the deodorized oil and/or fat B and deodorized oil and/or fat C, chemical refining including an alkaline neutralization step or physical refining not including an alkaline neutralization step can be used as the refining method. From the viewpoint of flavor, it is preferable to use chemical refining. Chemical refining is a refining method that includes a step of removing free fatty acids using an alkali in a neutralization step, and is, for example, a method of refining crude oil pressed and extracted from a raw material by subjecting it to a degumming treatment, an alkaline neutralization treatment, a bleaching treatment, a dewaxing treatment, and a deodorizing treatment. In the deodorized oil and/or fat B and deodorized oil and/or fat C, general refining conditions for oils and/or fats can be used for steps other than deodorization.

From the viewpoint that the effects of the present invention are easily exhibited, the deodorized oil and/or fat B and deodorized oil and/or fat C are preferably deodorized oils and/or fats that have been subjected to the alkaline neutralization treatment and the bleaching treatment followed by the deodorizing treatment.

In the present invention, as the deodorized oil and/or fat B and deodorized oil and/or fat C, at least one of soybean oil, corn oil, cottonseed oil, sunflower oil, and rapeseed oil is used. When two or more oils and/or fats are mixed and used, they may be mixed at any stage of refining, but it is preferable to mix them after the deodorizing treatment. Also, when blending oils and/or fats other than soybean oil, corn oil, cottonseed oil, sunflower oil, and rapeseed oil, it is preferable to mix them after the deodorizing treatment is completed.

The acid value of the deodorized oil and/or fat B and deodorized oil and/or fat C is reduced even in the deodorizing step, but it is preferably reduced in alkaline neutralization (deacidification) as well. As the oil and/or fat used for alkaline neutralization, it is possible to use crude oil containing water degummed oil, oil and/or fat added with phosphoric acid, or degummed oil from which the gum content is removed by centrifugation or the like after addition of phosphoric acid. As the alkaline neutralization method, it is preferable to add an aqueous solution of sodium hydroxide having a concentration of 5 to 15% in an equal amount of 0.8 to 1.8 times the acid amount calculated from the acid value of the oil and/or fat, and remove the fatty acid soap and the like by centrifugation or the like. It is more preferable to add the aqueous solution of sodium hydroxide at a concentration of 8 to 13% in an equal amount of 1.0 to 1.5 times the amount of free fatty acids. Further, it is more preferable to carry out the addition and separation treatment of the sodium hydroxide aqueous solution twice or more. The post-step of the sodium hydroxide treatment is a bleaching step, but it is more preferable to perform a bleaching step by washing with water after the sodium hydroxide treatment.

Further, as an alkaline neutralization method, the Zenith process may be used in which, to a dilute alkaline solution (such as an aqueous solution of sodium hydroxide, oil droplets are added at the lower part of the alkaline solution and neutralized while the oil droplets rise.

The production of the deodorized oil and/or fat B and deodorized oil and/or fat C includes a step of deodorization so that the total tocopherol content and acid value in the deodorized oil and/or fat B and/or deodorized oil and/or fat C satisfy the requirements of the deodorized oil and/or fat B and/or deodorized oil and/or fat C, and these can be achieved by performing the deodorizing step under excessive conditions. As the deodorizing conditions, a vacuum steam distillation apparatus is used, but it can be carried out at a higher temperature, under a high vacuum, at a higher steam content, or for a longer period of time than the usual conditions for vacuum steam distillation. As the deodorizing condition, a vacuum steam distillation apparatus is used, but it can be carried out at a higher temperature, under a high vacuum, at a higher steam content, or for a longer period of time than the usual conditions for vacuum steam distillation. For example, when it is carried out in a range of the deodorizing temperature of 200 to 280°C, the vacuum degree of 100 to 500 Pa, the steam content of 1 to 8% by mass (vs oil and/or fat), or the deodorizing time of 30 to 120 minutes, it is preferable to satisfy two or more conditions selected from a deodorizing temperature of 235°C or higher, a vacuum degree of 500 Pa or lower, a steam content of 2.0% by mass or more (vs oil and/or fat), and a deodorizing time of 50 minutes or more, and more preferably three conditions therefrom. The deodorizing temperature is more preferably 245°C or higher, and further preferably 250°C or higher. The vacuum degree is more preferably 400 Pa or less, further preferably 280 Pa or less, and especially preferably 260 Pa or less. The steam content is more preferably 2.4% by mass or more (vs oil and/or fat), and further preferably 3% by mass or more (vs oil and/or fat). The deodorizing time is more preferably 60 minutes or more, and further preferably 70 minutes or more.

Note that in the deodorizing step, the temperature is lowered at the end of the deodorizing treatment, and it is preferable to add citric acid at that time. Addition of citric acid enhances oxidative stability. Citric acid is preferably added at 10 to 50 ppm, and more preferably 26 to 50 ppm, based on the deodorized oil and/or fat. Since citric acid does not disperse or dissolve in oil as it is, it is preferable to add it as an aqueous solution of 5 to 20% by mass.

### (Production of Other Oils and/or Fats)

Undeodorized oils and/or fats and deodorized oils and/or fats may be contained as oils and/or fats other than the deodorized oil and/or fat A, deodorized oil and/or fat B, and deodorized oil and/or fat C. As a method for refining these oils and/or fats, it is preferable to use chemical refining.

### (Adding Step)

The present invention includes a step of adding silicone oil so that the content of the silicone oil in the oil and/or fat composition is 0.5 to 10 mass ppm. Although not particularly limited, silicone oil can be added and stirred in the oil and/or fat directly or after dilution with the oil and/or fat. The oil and/or fat that dilutes the silicone oil and/or the oil and/or fat to be added with the silicone oil may be the above-described deodorized oil and/or fat, but may be another oil and/or fat. For example, when the oil and/or fat composition is a blend of oils and/or fats containing the above-described deodorized oil and/or fat, the silicone oil may be blended after being added to the oil and/or fat before blending, or the silicone oil may be added after the oil and/or fat is blended.

### <Method for Suppressing Heat Coloring in Oil and/or Fat Composition>

A method for suppressing heat coloring in the oil and/or fat composition of the present invention includes: deodorizing an RBD palm-based oil and/or fat so as to satisfy the following deodorized oil and/or fat A; optionally deodorizing at least one oil and/or fat selected from soybean oil, corn oil, cottonseed oil, sunflower oil, and rapeseed oil so as to satisfy the following deodorized oil and/or fat B and/or deodorized oil and/or fat C; and adding silicone oil so that a content of silicone oil in the oil and/or fat composition is 0.5 to 10 mass ppm, wherein in the oil and/or fat composition, 10 to 60% by mass of the deodorized oil and/or fat is the deodorized oil and/or fat A, the remaining deodorized oil and/or fat is the following deodorized oil and/or fat B and/or deodorized oil and/or fat C, and a total content of the deodorized oil and/or fat A, deodorized oil and/or fat B, and deodorized oil and/or fat C is 100% by mass of the deodorized oil and/or fat in the oil and/or fat composition. Details are as described in the above-mentioned <Oil and/or Fat Composition> and <Method for Producing Oil and/or Fat Composition>. By using the oil and/or fat composition prepared by the suppressing method, it is possible to suppress the coloring of the oil and/or fat composition due to heating even when the oil and/or fat composition is repeatedly heated.

### Examples

Hereinafter, the present invention is specifically described with reference to Examples, but the present invention is not limited to these Examples.

### <Analysis Method>

The analysis in each test was carried out according to the following methods.

### (γ-Tocotrienol Content and Total Tocopherol Content)

The γ-tocotrienol content was measured under the conditions of the "Standard Methods for the Analysis of Fats, Oils and Related Materials 2.4.10-2013 Tocopherol (Fluorescence Detector - High Speed Liquid Chromatography)" established by the Japan Oil Chemists' Society, and the content of the γ-tocotrienol component was calculated. In addition, regarding the total tocopherol content, α-tocopherol, β-tocopherol, γ-tocopherol, and δ-tocopherol in the deodorized oil and/or fat were measured in accordance with the "Standard Methods for the Analysis of Fats, Oils and Related Materials 2.4.10-2013 Tocopherol (Fluorescence Detector - High Speed Liquid Chromatography)" established by the Japan Oil Chemists' Society, and the total content (ratio) was calculated.

### (Acid Value)

The acid value was measured in accordance with the "Standard Methods for the Analysis of Fats, Oils and Related Materials 2.3.1-2013 Acid Value" established by the Japan Oil Chemists' Society. The acid value indicates the amount of free fatty acids contained in the oil and/or fat, and is expressed by a value in mg of potassium hydroxide required to neutralize 1 g of the sample oil.

### (Iodine Value)

The iodine value of the oil and/or fat was measured in accordance with the "Standard Methods for the Analysis of Fats, Oils and Related Materials 2.3.4.1-2013 Iodine Value (Wij s-Cyclohexane Method)" established by the Japan Oil Chemists' Society. The higher the iodine value, the more double bonds.

### (Color Tone)

The chromaticity of the test oil was measured with a Lovibond colorimeter (trade name "Lovibond PFX 995," manufactured by The Tintometer Limited) using a 0.5-inch cell to measure the chromaticity of yellow (Y value) and the chromaticity of red (R value). Based on these results, "Y+10R" was calculated and evaluated. The smaller the numerical value of Y+10R, the lighter the color tone, and the larger the numerical value of Y+10R, the darker the color tone.

In addition, the color tone reduction rate in each fry test is a comparison of the difference in color tone before and after frying with the reference oils and/or fats (Comparative Example 1, Reference Example 1, and Reference Example 7).

### <Preparation 1 of Oil and/or Fat Composition>

### (Deodorized Oils and/or Fats A1 to A4)

To RBD palm olein (refined bleached deodorized palm olein, acid value 0.06, iodine value 67, α-tocopherol 210 ppm, α-tocotrienol 197 ppm, γ-tocotrienol 263 ppm), 1% of activated clay was added based on oil, and bleaching was performed at 110°C for 20 minutes. The activated clay was filtered off to obtain a re-bleached (re-decolored) oil of RBD palm olein. The re-bleached oil of RBD palm olein was deodorized under the conditions shown in Table 1, and when the deodorizing temperature was lowered, citric acid was added at 150°C at 30 ppm based on oil to obtain deodorized oils and/or fats A1 to A4. Table 1 shows the γ-tocotrienol content (γ-tocotrienol amount) and acid value in the obtained deodorized oils and/or fats A1 to A4.

**Table 1**

| | | Deodorized Oil and/or Fat A1 | Deodorized Oil and/or Fat A2 | Deodorized Oil and/or Fat A3 | Deodorized Oil and/or Fat A4 |
|---|---|---|---|---|---|
| Deodorizing Condition | | | | | |
| | Temperature | 255°C | 255°C | 255°C | 255°C |
| | Time | 60 min | 60 min | 60 min | 60 min |
| | Steam Content | 2.4% | 2.4% | 2.4% | 2.4% |
| | Pressure | 600 Pa | 400 Pa | 267 Pa | 200 Pa |
| γ-Tocotrienol Amount | | 263 ppm | 218 ppm | 198 ppm | 119 ppm |
| Acid Value | | 0.06 | 0.03 | 0.02 | 0.02 |

### (Add Silicone Oil)

Silicone oil ("KF-96ADF-1,000CS" manufactured by Shin-Etsu Chemical Co., Ltd.) was added to the deodorized oils and/or fats A1 to A4 at 3 ppm based on the oils and/or fats. A fry test was conducted under the following conditions using the deodorized oils and/or fats A1 to A4 and the oils and/or fats obtained by adding silicone oil to the deodorized oils and/or fats A1 to A4 as test oils (Comparative Examples 1 to 5 and Examples 1 to 3).

### <Fry Test 1>

Each test oil at 4 L was placed in a fryer and subjected to fry cooking for 8 days (8 hours/day). For fry cooking, potato tempura (2 days), croquette (2 days), and karaage (4 days) were cooked in order by the following methods. Tables 2 and 3 show the color tone of the oil and/or fat composition before and after frying and the reduction rate of the color tone as compared with Comparative Example 1.

### [Potato Tempura]

Every hour, 8 slices of sweet potato with a thickness of 1 cm were battered (tempura powder (trade name "Nissin Oishi Tempura Ko," manufactured by Nisshin Foods Inc.):water=1:1.6) and fried at 180°C for 3.5 minutes.

### [Croquette]

Every hour, four 70g-croquettes (trade name "Nichirei Koromo Ga Sakusaku No Croquette (Vegetable)," manufactured by Nichirei Foods Inc.) were fried at 180°C for 4.5 minutes.

### [Karaage]

Every hour, 6 pieces of about 35 g of chicken thigh meat were battered (karaage flour (trade name "Karaage No Moto No. 1," manufactured by Nihon Shokken Co., Ltd.): water= 1: 1) and fried at 180°C for 4 minutes.

**Table 2**

| | Comparative Example 1 | Comparative Example 2 | Comparative Example 3 | Example 1 (not covered by the present invention) |
|---|---|---|---|---|
| Deodorized Oil | Deodorized Oil | and/or Fat A1 | Deodorized Oil | and/or Fat A2 |
| Add Silicone Oil | None | 3 ppm | None | 3 ppm |
| Color Tone Before Frying | 4.0 | 4.0 | 4.0 | 4.0 |
| Color Tone After Frying (Difference) | 54.0 (50.0) | 53.8 (49.8) | 53.4 (49.4) | 49.1 (45.1) |
| Color Tone Reduction Rate | - | - | 1% | 10% |

**Table 3**

| | Comparative Example 4 | Example 2 (not covered by the present invention) | Comparative Example 5 | Example 3 (not covered by the present invention) |
|---|---|---|---|---|
| Deodorized Oil | Deodorized Oil and/or Fat A3 | | Deodorized Oil and/or Fat A4 | |
| Add Silicone Oil | None | 3 ppm | None | 3 ppm |
| Color Tone Before Frying | 4.0 | 4.0 | 4.0 | 4.0 |
| Color Tone After Frying | 53.3 | 45.4 | 52.9 | 38.7 |
| (Difference) | (49.3) | (41.4) | (48.9) | (34.7) |
| Color Tone Reduction Rate | 1% | 17% | 1% | 31% |

As shown in Tables 2 and 3, it can be seen that the coloring of Examples 1 to 3 (not covered by the present invention) due to heating is suppressed as compared with Comparative Examples 1 to 4. That is, there is no difference between the deodorized oils and/or fats A1 to A4 free of silicone oil (Comparative Examples 1, 3, 4, and 5), and simply adding silicone oil to the deodorized oil and/or fat A1 has no effect (Comparative Example 2). On the other hand, when silicone oil is added to the deodorized oils and/or fats A2 to A4, heat coloring is suppressed (Examples 1 and 2, not covered by the present invention).

From the above results, it has been found that the heat coloring of the oil and/or fat composition can be suppressed by adjusting silicone oil and a deodorized oil and/or fat which is the deodorized oil and/or fat A with specific ranges of γ-tocotrienol content and acid value so as to satisfy the conditions in the present invention.

### <Preparation 2 of Oil and/or Fat Composition>

### (Deodorized Oils and/or Fats B1 to B3)

About 15% aqueous solution of sodium hydroxide was added in an equal amount of 1.2 times to soybean degummed oil (acid value 1.0, iodine value 132), and after stirring, a centrifuge was used to remove the precipitates. Activated clay was added at 1% based on oil, and bleaching was performed at 110°C for 20 minutes. The activated clay was filtered off to obtain soybean bleached oil. The soybean bleached oil was deodorized under the conditions shown in Table 4, and when the deodorizing temperature was lowered, citric acid was added at 150°C at 30 ppm based on oil to obtain deodorized oils and/or fats B1 to B3. Table 4 shows the total tocopherol content (total tocopherol amount) and acid value of the obtained deodorized oils and/or fats B1 to B3.

**Table 4**

| | Deodorized Oil and/or Fat B1 | Deodorized Oil and/or Fat B2 | Deodorized Oil and/or Fat B3 | |
|---|---|---|---|---|
| | | | | |
| Deodorizing Condition | | | | |
| | Temperature | 250°C | 250°C | 250°C |
| | Time | 60 min | 60 min | 60 min |
| | Steam Content | 2.4% | 2.4% | 2.4% |
| | Pressure | 600 Pa | 267 Pa | 200 Pa |
| Total Tocopherol Amount | | 1020 ppm | 601 ppm | 526 ppm |
| Acid Value | | 0.04 | 0.02 | 0.02 |

### (Add Silicone Oil)

Silicone oil ("KF-96ADF-1,000CS" manufactured by Shin-Etsu Chemical Co., Ltd.) was added to the deodorized oils and/or fats B1 to B3 at 3 ppm based on the oils and/or fats. The deodorized oils and/or fats B1 to B3 and the oils and/or fats obtained by adding silicone oil to the deodorized oils and/or fats B1 to B3 were used as test oils.

### <Fry Test 2>

Each test oil was used to perform a fry test in the same manner as in Fry Test 1. Table 5 shows the color tone of the oil and/or fat composition before and after frying and the reduction rate of the color tone as compared with Reference Example 1.

Silicone oil ("KF-96ADF-1,000CS" manufactured by Shin-Etsu Chemical Co., Ltd.) was added to the deodorized oils and/or fats B1 to B3 at 3 ppm based on the oils and/or fats. A fry test was conducted under the conditions of Fry Test 1 described above using the deodorized oils and/or fats B1 to B3 and the oils and/or fats obtained by adding silicone oil to the deodorized oils and/or fats B1 to B3 as test oils (Reference Examples 1 to 6, not covered by the present invention).

The following Reference Examples 1 to 6 are not according to the invention and are present for illustration purposes only.

**Table 5**

| | Reference Example 1 (not covered by the present invention) | Reference Example 2 (not covered by the present invention) | Reference Example 3 (not covered by the present invention) | Reference Example 4 (not covered by the present invention) | Reference Example 5 (not covered by the present invention) | Reference Example 6 (not covered by the present invention) |
|---|---|---|---|---|---|---|
| Deodorized Oil | Deodorized Oil and/or Fat B 1 | | Deodorized Oil and/or Fat B2 | | Deodorized Oil and/or Fat B3 | |
| Add Silicone Oil | None | 3 ppm | None | 3 ppm | None | 3 ppm |
| Color Tone Before Frying | 0.4 | 0.4 | 0.4 | 0.4 | 0.4 | 0.4 |
| Color Tone After Frying | 30.0 | 30.0 | 29.7 | 26.0 | 29.6 | 23.4 |
| (Difference) | (29.6) | (29.6) | (29.3) | (25.6) | (29.2) | (23.0) |
| Color Tone Reduction Rate | - | - | 1% | 14% | 1% | 22% |

As shown in Table 5, there is no difference between the deodorized oils and/or fats B1 to B3 free of silicone oil (Reference Examples 1, 3, and 5; not covered by the present invention), and simply adding silicone oil to the deodorized oil and/or fat B1 has no effect (Reference Example 2, not covered by the present invention). On the other hand, when silicone oil is added to the deodorized oils and/or fats B2 and B3, heat coloring is suppressed (Reference Examples 4 and 6, not covered by the present invention).

From the above results, it has been found that the heat coloring of the oil and/or fat composition can be suppressed by adjusting silicone oil and a deodorized oil and/or fat which is the deodorized oil and/or fat B with specific ranges of total tocopherol content and acid value so as to satisfy the conditions in the present invention. Therefore, even if the above-mentioned deodorized oil and/or fat A and deodorized oil and/or fat B are combined, they can be expected to have an effect of suppressing heat coloring.

### <Preparation 3 of Oil and/or Fat Composition>

### (deodorized oils and/or fats C1 to C6)

About 15% aqueous solution of sodium hydroxide was added in an equal amount of 1.2 times to rapeseed degummed oil (acid value 1.0, iodine value 113), and after stirring, a centrifuge was used to remove the precipitates. Activated clay was added at 1% based on oil, and bleaching was performed at 110°C for 20 minutes. The activated clay was filtered off to obtain rapeseed bleached oil. The rapeseed bleached oil was deodorized under the conditions shown in Table 6, and when the deodorizing temperature was lowered, citric acid was added at 150°C at 30 ppm based on oil to obtain deodorized oils and/or fats C1 to C6. Table 6 shows the total tocopherol content (total tocopherol amount) and acid value of the deodorized oils and/or fats of the obtained deodorized oils and/or fats C1 to C6.

**Table 6**

| | | Deodorized Oil and/or Fat C1 | Deodorized Oil and/or Fat C2 | Deodorized Oil and/or Fat C3 | Deodorized Oil and/or Fat C4 | Deodorized Oil and/or Fat C5 | Deodorized Oil and/or Fat C6 |
|---|---|---|---|---|---|---|---|
| Deodorizing Condition | | | | | | | |
| | Temperature | 250°C | 250°C | 250°C | 250°C | 250°C | 250°C |
| | Time | 80 min | 80 min | 80 min | 80 min | 80 min | 80 min |
| | Steam Content | 3.0% | 3.0% | 3.0% | 3.0% | 3.0% | 3.0% |
| | Pressure | 667 Pa | 467 Pa | 400 Pa | 333 Pa | 267 Pa | 200 Pa |
| Total Tocopherol Amount | | 645 ppm | 544 ppm | 519 ppm | 456 ppm | 411 ppm | 204 ppm |
| Acid Value | | 0.04 | 0.02 | 0.02 | 0.02 | 0.02 | 0.01 |

### (Add Silicone Oil)

Silicone oil ("KF-96ADF-1,000CS" manufactured by Shin-Etsu Chemical Co., Ltd.) was added to the deodorized oils and/or fats C1 to C6 at 3 ppm based on the oils and/or fats. The deodorized oils and/or fats C1 to C6 and the oils and/or fats obtained by adding silicone oil to the deodorized oils and/or fats C1 to C6 were used as test oils.

### <Fry Test 3>

Each test oil was used to perform a fry test in the same manner as in Fry Test 1 described above. Tables 7 and 8 show the color tone of the oil and/or fat composition before and after frying and the reduction rate of the color tone as compared with Reference Example 7 (not covered by the present invention).

The following Reference Examples 7 to 18 are not according to the invention and are present for illustration purposes only.

**Table 7**

| | Reference Example 7 (not covered by the present invention) | Reference Example 8 (not covered by the present invention) | Reference Example 9 (not covered by the present invention) | Reference Example 10 (not covered by the present invention) | Reference Example 11 (not covered by the present invention) | Reference Example 12 (not covered by the present invention) |
|---|---|---|---|---|---|---|
| Deodorized Oil | Deodorized Oil and/or Fat C1 | | Deodorized Oil and/or Fat C2 | | Deodorized Oil and/or Fat C3 | |
| Add Silicone Oil | None | 3 ppm | None | 3 ppm | None | 3 ppm |
| Color Tone Before Frying | 0.4 | 0.4 | 0.4 | 0.4 | 0.4 | 0.4 |
| Color Tone After Frying | 41.5 | 41.4 | 40.7 | 39.0 | 41.5 | 38.6 |
| (Difference) | (41.1) | (41.0) | (40.3) | (38.6) | (41.1) | (38.2) |
| Color Tone Reduction Rate | - | 0% | 2% | 6% | 0% | 7% |

**Table 8**

| | Reference Example 13 (not covered by the present invention) | Reference Example 14 (not covered by the present invention) | Reference Example 15 (not covered by the present invention) | Reference Example 6 (not covered by the present invention) | Reference Example 17 (not covered by the present invention) | Reference Example 18 (not covered by the present invention) |
|---|---|---|---|---|---|---|
| Deodorized Oil | Deodorized Oil and/or Fat C4 | | Deodorized Oil and/or Fat C5 | | Deodorized Oil and/or Fat C6 | |
| Add Silicone Oil | None | 3 ppm | None | 3 ppm | None | 3 ppm |
| Color Tone Before Frying | 0.4 | 0.4 | 0.4 | 0.4 | 0.4 | 0.4 |
| Color Tone After Frying | 41.1 | 37.3 | 41.4 | 35.5 | 40.7 | 33.0 |
| (Difference) | (40.7) | (36.9) | (41.0) | (35.1) | (40.3) | (32.6) |
| Color Tone Reduction Rate | 1% | 10% | 0% | 15% | 2% | 21% |

As shown in Tables 7 and 8, there is no difference in effect between the deodorized oils and/or fats C1 to C6 free of silicone oil (Reference Examples 7, 9, 11, 13, 15, and 17; not covered by the present invention), and simply adding silicone oil to the deodorized oil and/or fat C1 has no effect (Reference Example 8, not covered by the present invention). On the other hand, when silicone oil is added to the deodorized oils and/or fats C2 to C6, heat coloring is suppressed (Reference Examples 10, 12, 14, 16, and 18, not covered by the present invention).

From the above results, it has been found that the heat coloring of the oil and/or fat composition can be suppressed by adjusting silicone oil and a deodorized oil and/or fat which is the deodorized oil and/or fat C with specific ranges of total tocopherol content and acid value so as to satisfy the conditions in the present invention. Therefore, even if the above-mentioned deodorized oil and/or fat A and deodorized oil and/or fat C, or the deodorized oil and/or fat A, deodorized oil and/or fat B, and deodorized oil and/or fat C are combined, they can be expected to have an effect of suppressing heat coloring.

### <Preparation 4 of Oil and/or Fat Composition>

### (Deodorized Oils and/or Fats A5 and A6)

To RBD palm olein (refined bleached deodorized palm olein, acid value 0.07, iodine value 67, α-tocopherol 208 ppm, α-tocotrienol 202 ppm, γ-tocotrienol 259 ppm), 1% of activated clay was added based on oil, and bleaching was performed at 110°C for 20 minutes. The activated clay was filtered off to obtain a re-bleached oil of RBD palm olein. The re-bleached oil of RBD palm olein was deodorized under the conditions shown in Table 9, and when the deodorizing temperature was lowered, citric acid was added at 150°C at 30 ppm based on oil to obtain deodorized oils and/or fats A5 and A6. Table 9 shows the γ-tocotrienol content (γ-tocotrienol amount) and acid value in the obtained deodorized oils and/or fats A5 and A6.

### (Deodorized Oils and/or Fats B4 and B5)

About 15% aqueous solution of sodium hydroxide was added in an equal amount of 1.2 times to soybean degummed oil (acid value 1.1, iodine value 132), and after stirring, a centrifuge was used to remove the precipitates. Activated clay was added at 1% based on oil, and bleaching was performed at 110°C for 20 minutes. The activated clay was filtered off to obtain soybean bleached oil. The soybean bleached oil was deodorized under the conditions shown in Table 9, and when the deodorizing temperature was lowered, citric acid was added at 150°C at 30 ppm based on oil to obtain deodorized oils and/or fats B4 and B5. Table 9 shows the total tocopherol content (total tocopherol amount) and acid value of the obtained deodorized oils and/or fats B4 and B5.

**Table 9**

| | | Deodorized Oil and/or Fat A5 | Deodorized Oil and/or Fat A6 | Deodorized Oil and/or Fat B4 | Deodorized Oil and/or Fat B5 |
|---|---|---|---|---|---|
| Deodorizing Condition | | | | | |
| | Temperature | 255°C | 255°C | 250°C | 255°C |
| | Time | 60 min | 90 min | 60 min | 60 min |
| | Steam Content | 2.4% | 2.4% | 2.4% | 2.4% |
| | Pressure | 400 Pa | 267 Pa | 600 Pa | 267 Pa |
| γ-Tocotrienol Amount | | 263 ppm | 119 ppm | - | - |
| Total Tocopherol Amount | | 233 ppm | 98 ppm | 980 ppm | 882 ppm |
| Acid Value | | 0.06 | 0.02 | 0.04 | 0.02 |

### (Mixed Oils AB1 to AB3)

The deodorized oils and/or fats A5, A6, B4, and B5 were blended as shown in Table 10 to obtain mixed oils AB1 to AB3. Table 10 shows the γ-tocotrienol content, the total tocopherol content (total tocopherol amount), and the acid value in the oils and/or fats of the mixed oils.

**Table 10**

| | Mixed Oil AB1 | Mixed Oil AB2 | Mixed Oil AB3 |
|---|---|---|---|
| Deodorized Oil and/or Fat A5 | 50 Parts by Mass | | |
| Deodorized Oil and/or Fat A6 | | 50 Parts by Mass | 50 Parts by Mass |
| Deodorized Oil and/or Fat B4 | 50 Parts by Mass | | 25 Parts by Mass |
| Deodorized Oil and/or Fat B5 | | 50 Parts by Mass | 25 Parts by Mass |
| Total Tocopherol Amount | 606 ppm | 490 ppm | 515 ppm |
| γ-Tocotrienol Amount | 132 ppm | 60 ppm | 60 ppm |
| Acid Value | 0.05 | 0.02 | 0.02 |

### (Add Silicone Oil)

Silicone oil ("KF-96ADF-1,000CS" manufactured by Shin-Etsu Chemical Co., Ltd.) was added to the mixed oils AB1 to AB3 at 3 ppm based on the oils and/or fats. The mixed oils AB1 to AB3 and the oils and/or fats obtained by adding silicone oil to the mixed oils AB1 to AB3 were used as test oils.

### <Fry Test 4>

Each of the test oils, mixed oils AB1 to AB3, was used to perform a fry test in the same manner as in Fry Test 1 described above. Table 11 shows the color tone of the oil and/or fat composition before and after frying and the reduction rate of the color tone as compared with Comparative Example 6.

**Table 11**

| | Comparative Example 6 | Comparative Example 7 | Comparative Example 8 | Example 4 (according to the present invention) | Comparative Example 9 | Example 5 (not covered by the present invention) |
|---|---|---|---|---|---|---|
| Mixed Oil | Mixed Oil AB1 | | Mixed Oil AB2 | | Mixed Oil AB3 | |
| Add Silicone Oil | None | 3 ppm | None | 3 ppm | None | 3 ppm |
| Color Tone Before Frying | 3.0 | 3.0 | 3.0 | 3.0 | 3.0 | 3.0 |
| Color Tone After Frying (Difference) | 52.4 (49.4) | 52.3 (49.3) | 51.8 (48.8) | 40.3 (37.3) | 52.2 (49.2) | 44.4 (41.4) |
| Color Tone Reduction Rate | - | 0% | 1% | 24% | 0% | 16% |

From the results of Table 11, it has been found that in a mixed oil containing a deodorized oil and/or fat A with specific ranges of γ-tocotrienol content and acid value, the heat coloring of the oil and/or fat composition can be suppressed by adjusting so as to satisfy the conditions in the present invention.

## Claims

1. An oil and/or fat composition comprising:
93% by mass or more of a deodorized oil and/or fat, wherein
a silicone oil content in the oil and/or fat composition is 0.5 to 10 mass ppm,
10 to 60% by mass of the deodorized oil and/or fat in the oil and/or fat composition is the following deodorized oil and/or fat A,
the remaining deodorized oil and/or fat in the oil and/or fat composition is the following deodorized oil and/or fat B and/or deodorized oil and/or fat C, and
a total content of the deodorized oil and/or fat A, deodorized oil and/or fat B, and deodorized oil and/or fat C is 100% by mass of the deodorized oil and/or fat in the oil and/or fat composition.
Deodorized oil and/or fat A: a re-deodorized oil and/or fat of palm-based deodorized oil and/or fat having a γ-tocotrienol content of 250 ppm or less in the deodorized oil and/or fat A and an acid value of 0.03 or less.
Deodorized oil and/or fat B: a deodorized oil having a total tocopherol content of 900 ppm or less in the deodorized oil and/or fat B and an acid value of 0.03 or less, which is at least one selected from soybean oil, corn oil, cottonseed oil, and sunflower oil.
Deodorized oil and/or fat C: a rapeseed deodorized oil having a total tocopherol content of 550 ppm or less in the deodorized oil and/or fat C and an acid value of 0.03 or less.

2. The oil and/or fat composition according to claim 1, wherein in the oil and/or fat composition, the content of γ-tocotrienol is 100 to 240 ppm, and the total tocopherol content is 100 to 900 ppm.

3. The oil and/or fat composition according to claim 1 or 2, wherein the deodorized oil and/or fat A is a re-deodorized oil and/or fat of RBD palm oil and/or RBD palm olein.

4. A method for producing an oil and/or fat composition containing 93% by mass or more of a deodorized oil and/or fat, comprising:
deodorizing an RBD palm-based oil and/or fat so as to satisfy the following deodorized oil and/or fat A;
optionally deodorizing at least one oil and/or fat selected from soybean oil, corn oil, cottonseed oil, sunflower oil, and rapeseed oil so as to satisfy the following deodorized oil and/or fat B and/or deodorized oil and/or fat C; and
adding silicone oil so that a content of silicone oil in the oil and/or fat composition is 0.5 to 10 mass ppm,
wherein in the oil and/or fat composition, 10 to 60% by mass of the deodorized oil and/or fat is the deodorized oil and/or fat A, the remaining deodorized oil and/or fat is the following deodorized oil and/or fat B and/or deodorized oil and/or fat C, and a total content of the deodorized oil and/or fat A, deodorized oil and/or fat B, and deodorized oil and/or fat C is 100% by mass of the deodorized oil and/or fat in the oil and/or fat composition.
Deodorized oil and/or fat A: a re-deodorized oil and/or fat of palm-based deodorized oil and/or fat having a γ-tocotrienol content of 250 ppm or less in the deodorized oil and/or fat A and an acid value of 0.03 or less.
Deodorized oil and/or fat B: a deodorized oil having a total tocopherol content of 900 ppm or less in the deodorized oil and/or fat B and an acid value of 0.03 or less, which is at least one selected from soybean oil, corn oil, cottonseed oil, and sunflower oil.
Deodorized oil and/or fat C: a rapeseed deodorized oil having a total tocopherol content of 550 ppm or less in the deodorized oil and/or fat C and an acid value of 0.03 or less.

5. A method for suppressing heat tinting in an oil and/or fat composition containing 93% by mass or more of a deodorized oil and/or fat, comprising:
deodorizing an RBD palm-based oil and/or fat so as to satisfy the following deodorized oil and/or fat A;
optionally deodorizing at least one oil and/or fat selected from soybean oil, corn oil, cottonseed oil, sunflower oil, and rapeseed oil so as to satisfy the following deodorized oil and/or fat B and/or deodorized oil and/or fat C; and
adding silicone oil so that a content of silicone oil in the oil and/or fat composition is 0.5 to 10 mass ppm,
wherein in the oil and/or fat composition, 10 to 60% by mass of the deodorized oil and/or fat is the deodorized oil and/or fat A, the remaining deodorized oil and/or fat is the following deodorized oil and/or fat B and/or deodorized oil and/or fat C, and a total content of the deodorized oil and/or fat A, deodorized oil and/or fat B, and deodorized oil and/or fat C is 100% by mass of the deodorized oil and/or fat in the oil and/or fat composition.
Deodorized oil and/or fat A: a re-deodorized oil and/or fat of palm-based deodorized oil and/or fat having a γ-tocotrienol content of 250 ppm or less in the deodorized oil and/or fat A and an acid value of 0.03 or less.
Deodorized oil and/or fat B: a deodorized oil having a total tocopherol content of 900 ppm or less in the deodorized oil and/or fat B and an acid value of 0.03 or less, which is at least one selected from soybean oil, corn oil, cottonseed oil, and sunflower oil.
Deodorized oil and/or fat C: a rapeseed deodorized oil having a total tocopherol content of 550 ppm or less in the deodorized oil and/or fat C and an acid value of 0.03 or less.

## Patentansprüche

1. Öl- und/oder Fettzusammensetzung umfassend:
93 Massenprozent oder mehr eines desodorierten Öls und/oder Fetts, wobei
ein Silikonölgehalt in der Öl- und/oder Fettzusammensetzung 0,5 bis 10 Massen-ppm ist,
10 bis 60 Massenprozent des desodorierten Öls und/oder Fetts in der Öl- und/oder Fettzusammensetzung das folgende desodorierte Öl und/oder Fett A ist,
das restliche desodorierte Öl und/oder Fett in der Öl- und/oder Fettzusammensetzung das folgende desodorierte Öl und/oder Fett B und/oder desodorierte Öl und/oder Fett C ist, und
ein Gesamtgehalt des desodorierten Öls und/oder Fetts A, des desodorierten Öls und/oder Fetts B, und des desodorierten Öls und/oder Fetts C 100 Massenprozent des desodorierten Öls und/oder Fetts in der Öl- und/oder Fettzusammensetzung ist.
Desodoriertes Öl und/oder Fett A: ein erneut desodoriertes Öl und/oder Fett aus desodoriertem Öl auf Palmbasis und/oder Fett mit einem γ-Tocotrienolgehalt von 250 ppm oder weniger in dem desodorierten Öl und/oder Fett A und einer Säurezahl von 0,03 oder weniger.
Desodoriertes Öl und/oder Fett B: ein desodoriertes Öl mit einem Gesamt-Tocopherolgehalt von 900 ppm oder weniger in dem desodorierten Öl und/oder Fett B und einer Säurezahl von 0,03 oder weniger, das mindestens ein ausgewähltes aus Sojaöl, Maisöl, Baumwollsamenöl und Sonnenblumenöl ist.
Desodoriertes Öl und/oder Fett C: ein desodoriertes Rapsöl mit einem Gesamt-Tocopherolgehalt von 550 ppm oder weniger in dem desodorierten Öl und/oder Fett C und einer Säurezahl von 0,03 oder weniger.

2. Öl- und/oder Fettzusammensetzung gemäß Anspruch 1, wobei in der Öl- und/oder Fettzusammensetzung der γ-Tocotrienolgehalt 100 bis 240 ppm und der Gesamt-Tocopherolgehalt 100 bis 900 ppm sind.

3. Öl- und/oder Fettzusammensetzung gemäß Anspruch 1 oder 2, wobei das desodorierte Öl und/oder Fett A ein erneut desodoriertes Öl und/oder Fett von RBD-Palmöl und/oder RBD-Palmolein ist.

4. Verfahren zum Herstellen einer Öl- und/oder Fettzusammensetzung, die 93 Massenprozent oder mehr eines desodorierten Öls und/oder Fetts enthält, umfassend:
Desodorieren eines RBD-Öls auf Palmbasis und/oder -Fetts, um das folgende desodorierte Öl und/oder Fett A zu erfüllen;
optional Desodorieren von mindestens einem Öl und/oder Fett, ausgewählt aus Sojaöl, Maisöl, Baumwollsamenöl, Sonnenblumenöl und Rapsöl, um das folgende desodorierte Öl und/oder Fett B und/oder desodorierte Öl und/oder Fett C zu erfüllen; und
Zugeben von Silikonöl, so dass ein Silikonölgehalt in der Öl- und/oder Fettzusammensetzung 0,5 bis 10 Massen-ppm ist,
wobei in der Öl- und/oder Fettzusammensetzung 10 bis 60 Massenprozent des desodorierten Öls und/oder Fetts das desodorierte Öl und/oder Fett A ist, das restliche desodorierte Öl und/oder Fett das folgende desodorierte Öl und/oder Fett B und/oder desodoriertes Öl und/oder Fett C ist, und ein Gesamtgehalt des desodorierten Öls und/oder Fetts A, desodorierten Öls und/oder Fetts B, und desodorierten Öls und/oder Fetts C 100 Massenprozent des desodorierten Öls und/oder Fetts in der Öl- und/oder Fettzusammensetzung ist.
Desodoriertes Öl und/oder Fett A: ein erneut desodoriertes Öl und/oder Fett aus desodoriertem Öl auf Palmbasis und/oder Fett mit einem γ-Tocotrienolgehalt von 250 ppm oder weniger in dem desodorierten Öl und/oder Fett A und einer Säurezahl von 0,03 oder weniger.
Desodoriertes Öl und/oder Fett B: ein desodoriertes Öl mit einem Gesamt-Tocopherolgehalt von 900 ppm oder weniger in dem desodorierten Öl und/oder Fett B und einer Säurezahl von 0,03 oder weniger, das mindestens ein ausgewähltes aus Sojaöl, Maisöl, Baumwollsamenöl und Sonnenblumenöl ist.
Desodoriertes Öl und/oder Fett C: ein desodoriertes Rapsöl mit einem Gesamt-Tocopherolgehalt von 550 ppm oder weniger in dem desodorierten Öl und/oder Fett C und einer Säurezahl von 0,03 oder weniger.

5. Verfahren zur Unterdrückung von Hitzefärbung in einer Öl- und/oder Fettzusammensetzung, die 93 Massenprozent oder mehr eines desodorierten Öls und/oder Fetts enthält, umfassend:
Desodorieren eines RBD-Öls auf Palmbasis und/oder -Fetts, um das folgende desodorierte Öl und/oder Fett A zu erfüllen;
optional Desodorieren von mindestens einem Öl und/oder Fett, ausgewählt aus Sojaöl, Maisöl, Baumwollsamenöl, Sonnenblumenöl und Rapsöl, um das folgende desodorierte Öl und/oder Fett B und/oder desodorierte Öl und/oder Fett C zu erfüllen; und
Zugeben von Silikonöl, so dass ein Silikonölgehalt in der Öl- und/oder Fettzusammensetzung 0,5 bis 10 Massen-ppm ist,
wobei in der Öl- und/oder Fettzusammensetzung 10 bis 60 Massenprozent des desodorierten Öls und/oder Fetts das desodorierte Öl und/oder Fett A sind, das restliche desodorierte Öl und/oder Fett das folgende desodorierte Öl und/oder Fett B und/oder desodorierte Öl und/oder Fett C ist und ein Gesamtgehalt des desodorierten Öls und/oder Fetts A, desodorierten Öls und/oder Fetts B, und desodorierten Öls und/oder Fetts C 100 Massenprozent des desodorierten Öls und/oder Fetts in der Öl- und/oder Fettzusammensetzung ist.
Desodoriertes Öl und/oder Fett A: ein erneut desodoriertes Öl und/oder Fett aus desodoriertem Öl auf Palmbasis und/oder Fett mit einem γ-Tocotrienolgehalt von 250 ppm oder weniger in dem desodorierten Öl und/oder Fett A und einer Säurezahl von 0,03 oder weniger.
Desodoriertes Öl und/oder Fett B: ein desodoriertes Öl mit einem Gesamt-Tocopherolgehalt von 900 ppm oder weniger in dem desodorierten Öl und/oder Fett B und einer Säurezahl von 0,03 oder weniger, das mindestens ein ausgewähltes aus Sojaöl, Maisöl, Baumwollsamenöl und Sonnenblumenöl ist.
Desodoriertes Öl und/oder Fett C: ein desodoriertes Rapsöl mit einem Gesamt-Tocopherolgehalt von 550 ppm oder weniger in dem desodorierten Öl und/oder Fett C und einer Säurezahl von 0,03 oder weniger.

## Revendications

1. Composition d'huile et/ou de matière grasse, comprenant :
93 % en masse ou plus d'une huile et/ou d'une matière grasse désodorisée, dans laquelle
une teneur en huile de silicone dans la composition d'huile et/ou de matière grasse est de 0,5 à 10 ppm en masse,
10 à 60% en masse de l'huile et/ou de la matière grasse désodorisée dans la composition d'huile et/ou de matière grasse est l'huile et/ou la matière grasse désodorisée A suivante,
l'huile et/ou la matière grasse désodorisée restante dans la composition d'huile et/ou de matière grasse est l'huile et/ou la matière grasse désodorisée B suivante et/ou l'huile et/ou la matière grasse désodorisée C suivante, et
une teneur totale en huile et/ou matière grasse désodorisée A, huile et/ou matière grasse désodorisée B et huile et/ou matière grasse désodorisée C représente 100 % en masse de l'huile et/ou matière grasse désodorisée dans la composition d'huile et/ou de matière grasse.
Huile et/ou matière grasse désodorisée A : une huile et/ou matière grasse redésodorisée d'huile et/ou de matière grasse désodorisée à base de palme présentant une teneur en γ-tocotriénol inférieure ou égale à 250 ppm dans l'huile et/ou la matière grasse désodorisée A et un indice d'acidité inférieur ou égal à 0,03.
Huile et/ou matière grasse désodorisée B : une huile désodorisée présentant une teneur totale en tocophérol inférieure ou égale à 900 ppm dans l'huile et/ou la matière grasse désodorisée B et un indice d'acidité inférieur ou égal à 0,03, qui est au moins une choisie parmi l'huile de soja, l'huile de maïs, l'huile de coton et l'huile de tournesol.
Huile et/ou matière grasse désodorisée C : une huile de colza désodorisée présentant une teneur totale en tocophérol inférieure ou égale à 550 ppm dans l'huile et/ou la matière grasse désodorisée C et un indice d'acidité inférieur ou égal à 0,03.

2. Composition d'huile et/ou de matière grasse selon la revendication 1, dans laquelle dans la composition d'huile et/ou de matière grasse, la teneur en γ-tocotriénol est de 100 à 240 ppm et la teneur totale en tocophérol est de 100 à 900 ppm.

3. Composition d'huile et/ou de matière grasse selon la revendication 1 ou 2, dans laquelle l'huile et/ou la matière grasse désodorisée A est une huile et/ou matière grasse redésodorisée d'huile de palme RBD et/ou d'oléine de palme RBD.

4. Procédé de production d'une composition d'huile et/ou de matière grasse contenant 93 % en masse ou plus d'une huile et/ou matière grasse désodorisée, comprenant :
la désodorisation d'une huile et/ou matière grasse à base de palme RBD afin de satisfaire à l'huile et/ou matière grasse désodorisée A suivante ;
la désodorisation éventuelle d'au moins une huile et/ou matière grasse choisie parmi l'huile de soja, l'huile de maïs, l'huile de coton, l'huile de tournesol et l'huile de colza afin de satisfaire à l'huile et/ou matière grasse désodorisée B et/ou à l'huile et/ou matière grasse désodorisée C suivantes ; et
l'ajout de l'huile de silicone pour qu'une teneur en huile de silicone dans la composition d'huile et/ou de matière grasse soit de 0,5 à 10 ppm en masse,
dans lequel dans la composition d'huile et/ou de matière grasse, 10 à 60 % en masse de l'huile et/ou de la matière grasse désodorisée est l'huile et/ou la matière grasse désodorisée A, l'huile et/ou la matière grasse désodorisée restante est l'huile et/ou la matière grasse désodorisée B et/ou l'huile et/ou la matière grasse désodorisée C suivantes, et une teneur totale en huile et/ou matière grasse désodorisée A, huile et/ou matière grasse désodorisée B et huile et/ou matière grasse désodorisée C représente 100 % en masse de l'huile et/ou de la matière grasse désodorisée dans la composition d'huile et/ou de matière grasse.
Huile et/ou matière grasse désodorisée A : une huile et/ou matière grasse redésodorisée d'huile et/ou de matière grasse désodorisée à base de palme présentant une teneur en γ-tocotriénol inférieure ou égale à 250 ppm dans l'huile et/ou la matière grasse désodorisée A et un indice d'acidité inférieur ou égal à 0,03.
Huile et/ou matière grasse désodorisée B : une huile désodorisée présentant une teneur totale en tocophérol inférieure ou égale à 900 ppm dans l'huile et/ou la matière grasse désodorisée B et un indice d'acidité inférieur ou égal à 0,03, qui est au moins une choisie parmi l'huile de soja, l'huile de maïs, l'huile de coton et l'huile de tournesol.
Huile et/ou matière grasse désodorisée C : une huile de colza désodorisée présentant une teneur totale en tocophérol inférieure ou égale à 550 ppm dans l'huile et/ou la matière grasse désodorisée C et un indice d'acidité inférieur ou égal à 0,03.

5. Procédé permettant de supprimer la coloration thermique d'une composition d'huile et/ou de matière grasse contenant 93 % en masse ou plus d'une huile et/ou matière grasse désodorisée, comprenant :
la désodorisation d'une huile et/ou matière grasse à base de palme RBD afin de satisfaire à l'huile et/ou matière grasse désodorisée A suivante ;
la désodorisation éventuelle d'au moins une huile et/ou matière grasse choisie parmi l'huile de soja, l'huile de maïs, l'huile de coton, l'huile de tournesol et l'huile de colza afin de satisfaire à l'huile et/ou matière grasse désodorisée B et/ou à l'huile et/ou matière grasse désodorisée C suivantes ; et
l'ajout de l'huile de silicone pour qu'une teneur en huile de silicone dans la composition d'huile et/ou de matière grasse soit de 0,5 à 10 ppm en masse,
dans lequel dans la composition d'huile et/ou de matière grasse, 10 à 60 % en masse de l'huile et/ou de la matière grasse désodorisée est l'huile et/ou la matière grasse désodorisée A, l'huile et/ou la matière grasse désodorisée restante est l'huile et/ou la matière grasse désodorisée B et/ou l'huile et/ou la matière grasse désodorisée C suivantes, et une teneur totale en huile et/ou matière grasse désodorisée A, huile et/ou matière grasse désodorisée B et huile et/ou matière grasse désodorisée C représente 100 % en masse de l'huile et/ou de la matière grasse désodorisée dans la composition d'huile et/ou de matière grasse.
Huile et/ou matière grasse désodorisée A : une huile et/ou matière grasse redésodorisée d'huile et/ou de matière grasse désodorisée à base de palme présentant une teneur en γ-tocotriénol inférieure ou égale à 250 ppm dans l'huile et/ou la matière grasse désodorisée A et un indice d'acidité inférieur ou égal à 0,03.
Huile et/ou matière grasse désodorisée B : une huile désodorisée présentant une teneur totale en tocophérol inférieure ou égale à 900 ppm dans l'huile et/ou la matière grasse désodorisée B et un indice d'acidité inférieur ou égal à 0,03, qui est au moins une choisie parmi l'huile de soja, l'huile de maïs, l'huile de coton et l'huile de tournesol.
Huile et/ou matière grasse désodorisée C : une huile de colza désodorisée présentant une teneur totale en tocophérol inférieure ou égale à 550 ppm dans l'huile et/ou la matière grasse désodorisée C et un indice d'acidité inférieur ou égal à 0,03.
